# EUROPEAN PATENT APPLICATION

(11) **EP 3 587 109 A1**
(43) Date of publication of application: **01.01.2020**
(21) Application number: 18180931.0
(22) Date of filing: 29.06.2018
(51) Int. Cl.: B33Y 10/00, B22F 3/105, B33Y 30/00, B33Y 50/00, B33Y 40/00, B29C 64/153, B29C 64/386, B29C 64/30, B29C 64/364, B29C 64/25

(54) **DEVICE FOR DETERMINING AT LEAST ONE STREAMING PARAMETER OF A FLUID STREAM**

(71) Applicant: CL Schutzrechtsverwaltungs GmbH, 96215 Lichtenfels (DE)
(72) Inventor: ENGEL, Viktor, 96482 Ahorn (DE); SITTIG, Dominic, 96215 Lichtenfels (DE)
(74) Representative: Hafner & Kohl Patent- und Rechtsanwälte Partnerschaft mbB

(57) **Abstract**

Device (1) for determining at least one streaming parameter of a fluid stream (2) streaming through a process chamber volume (3) of a process chamber (4) of an additive manufacturing apparatus (5), the device (1) comprising:
- a housing (8) detachably connectable or connected with at least one housing structure element (7) of a housing structure (6) of an additive manufacturing apparatus (5);
- at least one, particularly probe-like, streaming parameter determination element (9) disposed at or in the housing (8), the at least one streaming parameter determination element (9) being insertable or inserted into a process chamber volume (3) of a process chamber (4) of an additive manufacturing apparatus (5) when the housing (8) is connected with at least one housing structure element (7) of a housing structure (6) of an additive manufacturing apparatus (5).

## Description

The invention relates to a device for determining at least one streaming parameter of a fluid stream streaming through a process chamber volume of a process chamber of an additive manufacturing apparatus.

In additive manufacturing, it is known that the use of a fluid stream, i.e. particularly an inert gas stream, streaming through a process chamber volume of a process chamber of an additive manufacturing apparatus is important for the process quality and the part quality.

In this context, a practical and reliable determination of the streaming parameters characterizing the streaming properties of respective fluid streams is advisable so as to monitor and/or observe the streaming properties of the respective fluid stream while streaming through the process chamber volume. The determination of the streaming parameters of respective fluids shall particularly, be exact, spatially resolved, and easy to perform.

Hitherto, diverse devices for determining at least one streaming parameter of a fluid stream streaming through a process chamber volume of a process chamber of an additive manufacturing apparatus have been suggested. Yet, these devices are typically complex in design and/or function. Also, these devices typically do not allow for an exact spatially resolved and easy to perform determination of streaming parameters.

It is the object of the invention to provide an improved device for determining at least one streaming parameter of a fluid stream streaming through a process chamber volume of a process chamber of an additive manufacturing apparatus, which particularly allows for an exact spatially resolved and easy to perform determination of streaming parameters.

This object is achieved by a device according to Claim 1. The claims depending on Claim 1 relate to possible embodiments of the device according to Claim 1.

The device described herein is a device for determining at least one streaming parameter of a fluid stream streaming through a process chamber volume of a process chamber of an additive manufacturing apparatus. A streaming parameter of a respective fluid stream is or refers to any chemical and/or physical parameter of the fluid stream, e.g. a streaming profile, a streaming velocity, a fluid stream temperature, a fluid stream pressure, etc. A streaming parameter may also refer to changes and/or gradients of at least one chemical and/or physical parameter of a respective fluid stream. The device may also be deemed or denoted as a streaming parameter measurement tool.

The device is assignable or assigned to an additive manufacturing apparatus. An additive manufacturing apparatus is an apparatus allowing for additively manufacturing at least one three-dimensional part by means of successive layerwise consolidation of layers of build material applied in a process chamber of the additive manufacturing apparatus. A respective additive manufacturing apparatus typically comprises a housing structure which serves for housing diverse functional components and/or structural components of the additive manufacturing apparatus. The housing structure particularly, serves for housing a process chamber of the additive manufacturing apparatus - the process chamber being an example of a respective functional and/or structural component of the additive manufacturing apparatus. The housing structure may also house a support structure, e.g. a support frame, supporting diverse functional components and/or structural components of the additive manufacturing apparatus. The housing structure typically, comprises one or more housing structure element(s). The housing structure may particularly, form an outer shell of a respective additive manufacturing apparatus.

As indicated above, a respective additive manufacturing apparatus typically comprises a process chamber. The process chamber typically defines a process chamber volume. The process chamber volume is typically defined by process chamber walls. A fluid stream which fluid stream may also be deemed or denoted as a process gas stream, streams through the process chamber volume, i.e. particularly across a build plane, during operation of the additive manufacturing apparatus so as to remove residues, e.g. soot, spatters, etc., generated by selectively consolidating respective build material layers during the additive build-up of the part which is to be additively manufactured. The fluid stream enters the process chamber volume at at least one inlet portion, e.g. an opening in a process chamber wall, and exits the process chamber volume at at least one outlet portion of the process chamber, e.g. an opening in a process chamber wall. The fluid stream may be generated by a fluid stream generating unit. The fluid stream may be a blowing stream or a sucking stream, for instance.

The device comprises a housing and at least one, particularly probe-like, streaming parameter determination element.

The housing of the device typically has a box-like or cuboid-like shape. The housing of the device thus, typically defines an (inner) housing volume. The housing volume of the housing of the device is defined by housing walls. Respective housing walls may be side-walls, top-walls, bottom walls, for instance.

The housing of the device is detachably connectable or connected with at least one housing structure element of a housing structure of an additive manufacturing apparatus. Particularly, the housing of the device is connectable or connected with at least one housing structure element delimiting an access opening providing an access into the process chamber volume of the process chamber of the additive manufacturing apparatus, whereby the housing of the device is connectable or connected at housing structure element portions delimiting the access opening. The housing of the device typically encloses the access opening providing an access into the process chamber volume of the process chamber of the additive manufacturing apparatus.

The housing of the device typically comprises at least one connecting interface, which may be built as or comprise a flange, allowing for detachably connecting the housing of the device with at least one housing structure element of a housing structure of an additive manufacturing apparatus. The connecting interface may be configured to mechanically connect the housing of the device with at least one housing structure element of a housing structure of an additive manufacturing apparatus, for instance. A mechanical connection may be implemented by mechanical connection elements allowing for a force-fit connection, e.g. screws, and/or positive-fitting connections, such as protrusions, receptacles, etc. Hence, other connection principles such as magnetic connection principles, pneumatic connection principles, etc. are conceivable as well.

As mentioned above, the housing of the device is detachably connectable or connected with the at least one housing structure element of the housing structure of an additive manufacturing apparatus. The housing of the device can thus, be reversibly connected with a respective housing structure element or disconnected form a respective housing structure element.

The state in which the housing of the device is connected with at least one housing structure element of a housing structure of an additive manufacturing apparatus will can be deemed or denoted as "connected state".

The at least one streaming parameter determination element typically has a longitudinal basic shape. In particular, the streaming parameter determination element may have a L-shape.

The streaming parameter determination element is disposed at or in the housing of the device. The streaming parameter determination element can thus, be disposed outside of the housing of the device, e.g. disposed at a freely exposed outer surface of the housing of the device, or at least partially inside the housing volume of the housing of the device. In either case, the streaming parameter determination element may comprise at least one portion which extends off or outside the housing of the device.

The streaming parameter determination element is at least partially insertable or inserted into the process chamber volume of a process chamber of an additive manufacturing apparatus in the connected state, i.e. when the housing of the device is connected with at least one housing structure element of a housing structure of an additive manufacturing apparatus. In particular, at least the portion of the streaming parameter determination element extending off or outside the housing of the device is insertable or inserted into the process chamber volume of a process chamber of an additive manufacturing apparatus when the housing of the device is connected with at least one housing structure element of a housing structure of an additive manufacturing apparatus.

The streaming parameter determination element may thus, comprise a first portion which is disposed at or in the housing of the device and a second portion which extends off or outside the housing of the device. The second portion is typically provided with a determination head, i.e. particularly a probe head, being configured to generate determination signals (measurement signals) when being inserted into the process chamber volume of a process chamber of an additive manufacturing apparatus in the connected state. The determination head may be disposed at or adjacent the free end of the second portion. With regard to the exemplary embodiment of a streaming parameter determination element having a L-shape, the second portion of the streaming parameter determination element may be built by the short leg of the "L."

The determination head is connected with suitable connection elements, e.g. connection lines or wires, provided with the streaming parameter determination element allowing for communicating respective determination signals for further processing of the determination signals.

Further processing of respective determination signals is typically performed by a hardware-and/or software-embodied streaming parameter determination unit. The streaming parameter determination element may thus, be connectable or connected with at least one streaming parameter determination unit being configured to perform a respective further processing of determination signals. The streaming parameter determination unit is particularly, configured to determine at least one streaming parameter of a fluid stream streaming through a process chamber volume of a process chamber of an additive manufacturing apparatus in the connected state. The streaming parameter determination unit may comprise a determination algorithm for determining respective streaming parameters. The streaming parameter determination unit may be internal or external to the housing. In case that the streaming parameter determination unit is external to the housing, the housing may be provided with connection elements, e.g. sockets, for connecting the streaming parameter determination element with the streaming parameter determination unit.

The configuration of the device allows for an exact spatially resolved and easy to perform determination of streaming parameters. Thus, an improved device for determining at least one streaming parameter of a fluid stream is provided.

The housing of the device is particularly, detachably connectable or connected at the outside of at least one housing structure element of a housing structure of an additive manufacturing apparatus. Thus, the aforementioned connecting interface of the housing of the device particularly, allows for detachably connecting the housing of the device at the outside of a respective housing structure element, i.e. particularly at a freely exposed outer surface of a respective housing structure element. Connecting the housing of the device at the outside of a respective housing structure element allows for avoiding that a user may grasp into the inside of the housing structure, particularly inside the process chamber volume, of the additive manufacturing apparatus the device is connectable or connected with. Hence, a safe determination of respective streaming parameters is feasible.

The at least one streaming parameter determination element may be moveably supported relative to the housing of the device. Moving the streaming parameter determination element relative to the housing of the device generally allows for (freely) positioning the streaming parameter determination element and the determination head, respectively at different positions within the process chamber volume of the process chamber of an additive manufacturing apparatus in the connected state.

The housing of the device may comprise a plurality of attachment sites for attaching the streaming parameter determination element. Each attachment sites allows for a detachable attachment of the streaming parameter determination element. The streaming parameter determination element typically comprises at least one attachment portion for attaching the streaming parameter determination element to a respective attachment site. The attachment sites may be provided with at least one housing wall of the housing of the device. Hence, it is possible that one or more housing walls are provided with respective attachment sites. The attachment sites are typically disposed inside the housing. As a concrete example, the attachment sites may be provided at a housing wall surface, particularly of a bottom housing wall surface, oriented towards the (inner) housing volume. The attachment sites may be arranged in any regular or irregular pattern. As a concrete example, the attachment sites may be arranged in a grid-like pattern.

Typically, each attachment site corresponds to a specific determination position (measurement position) of a determination head of the streaming parameter determination element within a process chamber volume of a process chamber of an additive manufacturing apparatus when the housing is connected with at least one housing structure element of a housing structure of the additive manufacturing apparatus. Likewise, each attachment site corresponds to a specific determination position of a determination head of the streaming parameter determination element relative to the build plane of an additive manufacturing apparatus when the housing is connected with at least one housing structure element of a housing structure of the additive manufacturing apparatus. Hence, attaching the streaming parameter determination element to a specific attachment site results in that the determination head of the streaming parameter determination element is disposed at a specific determination position within a respective process chamber volume. Hence, the determination head of the streaming parameter determination element may be disposed at different determination positions within a process chamber volume by simply changing the attachment site the streaming parameter determination element is attached to.

Attaching the streaming parameter determination element to respective attachment site may be performed manually or at least partially automatically. Automatic attachment may be performed by a grasping device, e.g. a robot, which may grasp the streaming parameter determination element so as to attach it to a specific attachment site and/or detach it from a specific attachment site.

At least one attachment site may be provided with at least one (optical) marking indicating its corresponding determination position of a determination head of the at least one streaming parameter determination element within a process chamber volume of a process chamber of an additive manufacturing apparatus when the housing is connected with at least one housing structure element of a housing structure of the additive manufacturing apparatus.

Generally, any kind of attachment principle is suitable for (detachably) attaching the streaming parameter determination element at a respective attachment site is conceivable. Particularly, plug- or screw-attachments are conceivable. An attachment site of the housing of the device may e.g. be built as or comprise a first plug- or screw-attachment element and an attaching portion of the streaming parameter determination element may be built as or comprise a corresponding second plug-or screw-attachment element. As a concrete example, an attachment site of the housing of the device may be built as or comprises a, particularly bore-like, receptacle and an attaching portion of the at least one streaming parameter determination element is built as or comprises a plug. Hence, a first plug-attachment element may be built as or comprise a, particularly bore-like, receptacle and a second plug-attachment element may be built as or comprise a plug. Yet, other configurations of first and second attachment elements are conceivable as well. Also, the attachment principle may implement a so called Poka-yoke attachment.

The housing of the device may comprise at least one sealable or sealed opening, wherein the second portion of the at least one streaming parameter determination element may extend through the at least one sealable or sealed opening. The opening may be provided as a slit, for instance. This particularly, applies to the embodiment in which the streaming parameter determination element is at least partially provided in the housing of the device. Particularly, the opening of the housing is typically provided with at least one seal element sealing the opening. The sealing element serves for sealing the (inner) housing volume of the housing of the device from a fluid exchange, particularly with the fluid stream streaming through a respective process chamber volume of a process chamber of an additive manufacturing apparatus in the connected state. Sealing of the opening avoids that the process gas stream streams into the inner housing volume. The sealing element may thus, provide a fluid-proof sealing. The sealing element may be built as or comprise a brush seal, an elastomer or rubber seal, a metal seal, for instance. The sealing element may also be built as or comprise a lid which can be moved between a sealing position and a non-sealing position.

The opening of the housing is typically oriented towards the respective housing structure element of the housing structure of the additive manufacturing apparatus the housing of the device is connectable or connected with. The opening of the housing of the device may be provided with at least one housing wall. The opening of the housing of the device may also be defined by at least one housing wall of the housing of the device. As a concrete example, the opening may be provided at a face side of a box-like or cuboid-like shaped housing of the device.

The housing of the device may comprise at least one viewing portion allowing a user to have a view into the inner housing volume of the housing of the device. The viewing portion may be built by a transparent portion of an at least partially transparent housing wall of the housing of the device. At least one housing wall of the housing of the device may thus, be built of or comprise a transparent material. A transparent material can be a glass or a transparent polymer, e.g. polycarbonate or polymethylmethacrylate, for instance.

The housing of the device may be built as or may comprise a glove-box comprising at least one glove element being insertable or inserted in the (inner) housing volume of the housing of the device. The glove element allows for grasping the streaming parameter determination element, particularly the first portion of the streaming parameter determination element, by a user or a robot. A user or robot may thus, grasp the streaming parameter determination element and move the grasped streaming parameter determination element to different positions inside the housing volume of the housing of the device. The streaming parameter determination element may thus, be moved to different attachment sites or removed from different attachment sites by simply grasping it.

The device may further comprise a support unit configured to support the housing of the device when being connected with the at least one housing structure element of the additive manufacturing apparatus. The support unit may particularly, be configured to support the housing of the device on a ground when being connected with the at least one housing structure element of the additive manufacturing apparatus. The support unit may be built as or comprise a support structure, e.g. a support frame. The support unit may thus, comprise a number of, particularly bar- or rod-like, support elements. The support elements may be extendable, e.g. in telescope-like manner, in at least one spatial direction. The support unit may comprise rollers or the like allowing for easily moving the support unit and the device to different positions relative to an additive manufacturing apparatus.

The device may further comprise a stream generating unit adapted to generate a stream of a test fluid for visualizing the streaming properties of the test fluid within the process chamber of an additive manufacturing apparatus in the connected state. The stream generating unit may comprise a, particularly flexible, stream insertion element, e.g. a lance, which is adapted to introduce a respective test fluid in the process chamber.

The invention also relates to a housing for a device as specified herein. The housing is detachably connectable or connected with at least one housing structure element of a housing structure of an additive manufacturing apparatus. All annotations regarding the device, particularly the housing of the device, also apply to the housing.

The invention also relates to a method for determining at least one streaming parameter of a fluid stream streaming through a process chamber volume of a process chamber of an additive manufacturing apparatus, wherein at least one device as described herein is used for determining the at least one streaming parameter. The method may particularly, comprise the steps of detachably connecting the housing with at least one housing structure element of a housing structure of an additive manufacturing apparatus and inserting the at least one streaming parameter determination element inside the process chamber volume of the process chamber so as to be in contact with the fluid stream in order to generate determination signals by the at least one streaming parameter determination element and processing the measurement signals in order to determine at least one streaming parameter of the fluid stream. All annotations regarding the device also apply to the method.

Furthermore, the invention relates to an apparatus for additively manufacturing at least one three-dimensional part comprising at least one device as specified herein. All annotations regarding the device also apply to the additive manufacturing apparatus. The additive manufacturing apparatus is particularly, configured to additively manufacture at least one three-dimensional part by means of successive layerwise selective irradiation and consolidation of layers of build material, e.g. a ceramic, metal, or polymer build material, applied in the build plane of the apparatus by means of at least one energy beam, e.g. an electron beam or a laser beam. The additive manufacturing apparatus can be a selective laser sintering apparatus, a selective laser melting apparatus, or a selective electron beam melting apparatus, for instance. Yet, it is also conceivable that the additive manufacturing apparatus is a binder jetting apparatus, particularly a metal binder jetting apparatus.

The additive manufacturing apparatus comprises a housing structure comprising at least one housing structure element. The housing structure is configured to house diverse functional components and/or structural components of the additive manufacturing apparatus. The housing structure is particularly, configured to house a process chamber of the additive manufacturing apparatus. The housing structure may also house a support structure, e.g. a support frame, supporting diverse functional components and/or structural components of the additive manufacturing apparatus. The housing structure typically, comprises a least one, particularly a plurality of, housing structure element(s). The housing structure may particularly, form an outer shell of the additive manufacturing apparatus.

As indicated above, the additive manufacturing apparatus comprises a number of functional and/or structural devices which are operable or operated during its operation. Each functional and/or structural device may comprise a number of functional and/or structural units. Exemplary functional and/or structural devices are the build material dosing device as specified above, a build material application device which is configured to apply an amount of dosed build material which is to be selectively irradiated and consolidated in the build plane of the apparatus, and an irradiation device which is configured to selectively irradiate and thereby, consolidate portions of a build material layer with at least one energy beam.

Exemplary embodiments of the invention are described with reference to the Fig., whereby:
- Fig. 1 - 4: each show a principle drawing of a device for determining at least one streaming parameter according to an exemplary embodiment.

Fig. 1 - 4 each show a principle drawing of a device 1 for determining at least one streaming parameter according to an exemplary embodiment. Fig 1 shows a perspective rear view of the device 1, Fig. 2 shows a perspective front view of the device 1, Fig. 4 shows a sectional side-view of the device 1, and Fig. 4 shows a side-view of the device 1 in an exemplary connected state in which the housing 8 of the device 1 is connected with a housing structure element 7 of a housing structure 6 of an additive manufacturing apparatus 5.

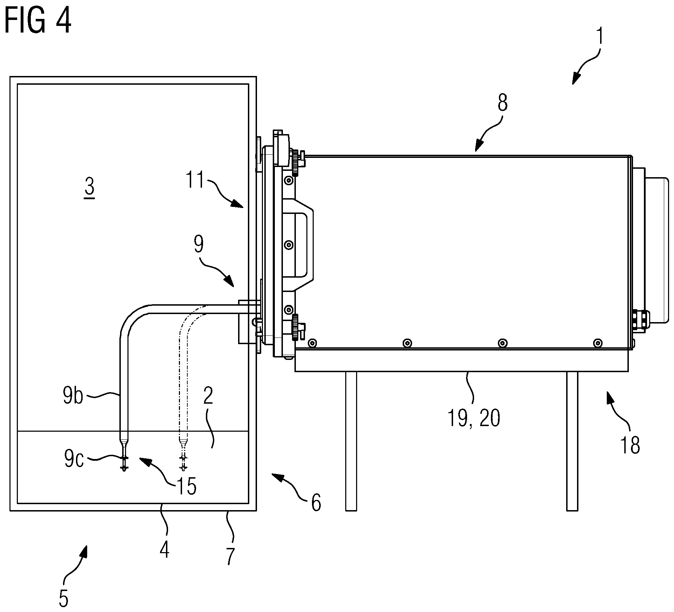

The device 1 is configured to determine at least one streaming parameter of a fluid stream 2 (see Fig. 4) streaming through a process chamber volume 3 of a process chamber 4 of an additive manufacturing apparatus 5. A streaming parameter of a respective fluid stream 2 is or refers to any chemical and/or physical parameter of the fluid stream, e.g. a streaming profile, a streaming velocity, a fluid stream temperature, a fluid stream pressure, etc. A streaming parameter may also refer to changes and/or gradients of at least one chemical and/or physical parameter of a respective fluid stream.

As is apparent from Fig. 4, the device 1 is assignable or assigned to an additive manufacturing apparatus 5 for additively manufacturing at least one three-dimensional part by means of successive layerwise consolidation of layers of build material applied in a process chamber 4 of the additive manufacturing apparatus 5. The additive manufacturing apparatus 5 comprises a housing structure 6 which serves for housing diverse functional components and/or structural components of the additive manufacturing apparatus 5. The housing structure 6 serves for housing the process chamber 4 being an example of a respective functional and/or structural component of the additive manufacturing apparatus 5. The housing structure 6 may also house a support structure (not shown), e.g. a support frame, supporting diverse functional components and/or structural components of the additive manufacturing apparatus 5. The housing structure 6 comprises one or more housing structure element(s) 7 and forms an outer shell of the additive manufacturing apparatus 5.

The device 1 comprises a housing 8 and at least one, particularly probe-like, streaming parameter determination element 9.

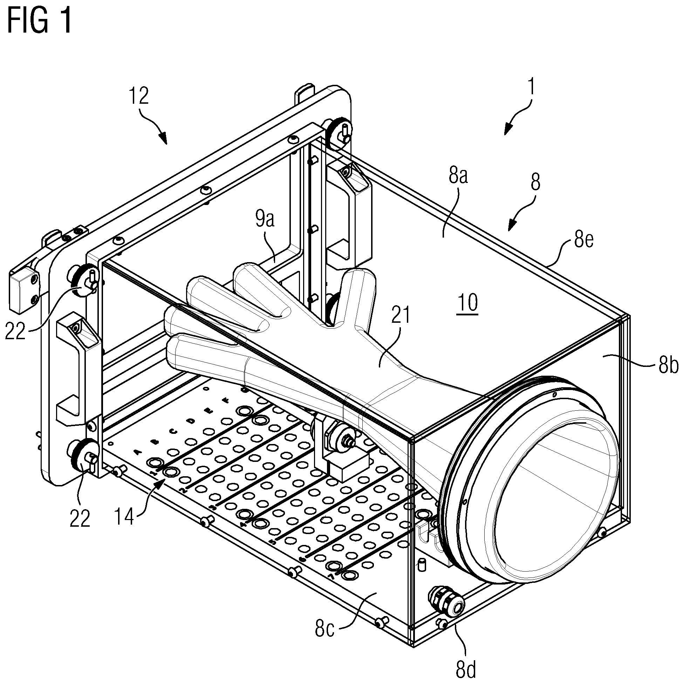

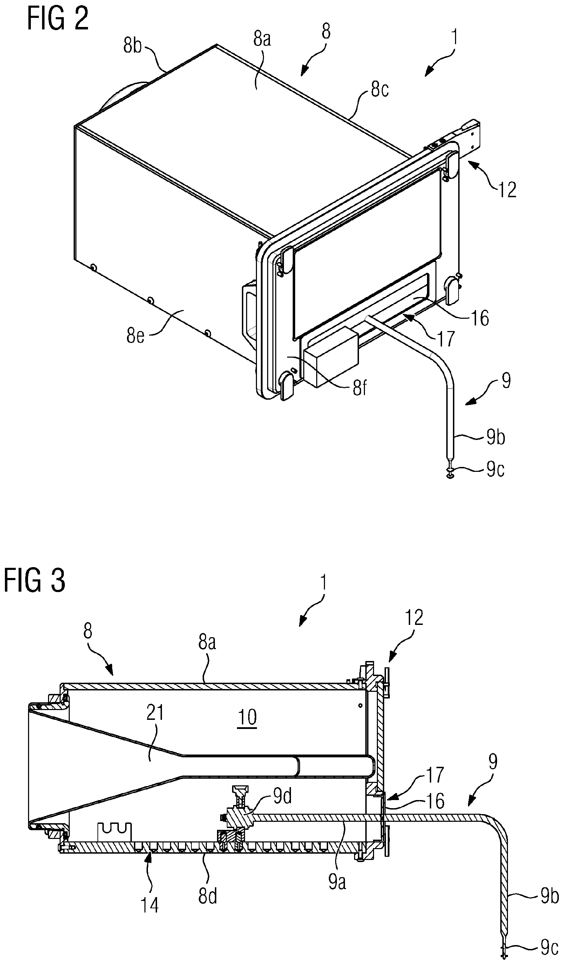

As is particularly, apparent from Fig. 1, 2, the housing 8 of the device 1 has a box-like or cuboid-like shape. The housing 8 of the device 1 thus, defines an (inner) housing volume 10. The housing volume 10 of the housing 8 of the device 1 is defined by housing walls 8a - 8f. Respective housing walls 8a - 8f may be side-walls, top-walls, bottom walls, for instance.

As is apparent from Fig. 4, the housing 8 of the device 1 is detachably connectable or connected with a housing structure element 7 of the housing structure 6 of the additive manufacturing apparatus 5. As is further apparent from Fig. 4, the housing 8 of the device 1 is connectable or connected with a housing structure element 7 delimiting an access opening 11 providing an access into the process chamber volume 3 of the process chamber 4 of the additive manufacturing apparatus 5, whereby the housing 8 of the device 1 is connectable or connected at housing structure element portions delimiting the access opening 11. The housing 8 of the device 1 encloses the access opening 11 providing an access into the process chamber volume 3 of the process chamber 4 of the additive manufacturing apparatus 5.

The housing 8 of the device 1 comprises at least one connecting interface 12 allowing for detachably connecting the housing 8 of the device 1 with the housing structure element 7 of the housing structure 6 of the additive manufacturing apparatus 5 (see Fig. 1, 3, 4). As is apparent from Fig. 4, the housing 8 of the device 1 is connectable or connected at the outside, i.e. at a freely exposed outer surface, of the housing structure element 7 of the housing structure 6 of the additive manufacturing apparatus 5.

The connecting interface 12, which may be built as or comprise a flange, may be configured to mechanically connect the housing 8 of the device 1 with the housing structure element 7 of the housing structure 6 of the additive manufacturing apparatus 5. A mechanical connection may be implemented by mechanical connection elements allowing for a force-fit connection, e.g. screws 22, and/or positive-fitting connections, such as protrusions, receptacles, etc. Hence, other connection principles such as magnetic connection principles, pneumatic connection principles, etc. are conceivable as well.

As is apparent from the Fig., the streaming parameter determination element 9 has a longitudinal basic shape. Specifically, the streaming parameter determination element 9 has a L-shape.

As is also apparent from the Fig, the streaming parameter determination element 9 is partially disposed in the housing 8 of the device 1. The streaming parameter determination element is thus, partially disposed inside the housing volume 10 of the housing 8 of the device 1. The streaming parameter determination element 9 thus, comprises a first portion 9a which is disposed in the housing 8 of the device 1 and a second portion 9b which extends off or outside the housing 8 of the device 1. The second portion 9b is built by the short leg of the "L."

The second portion 9b is provided with a determination head 9c, i.e. particularly a probe head, configured to generate determination signals (measurement signals) when being inserted into the process chamber volume 3 of the process chamber 4 of the additive manufacturing apparatus 5 in the connected state as shown in Fig. 4. The determination head 9c is disposed at the free end of the second portion 9c. The determination head 9c is connected with suitable connection elements (not shown), e.g. connection lines or wires, provided with the streaming parameter determination element 9 allowing for communicating respective determination signals for further processing of the determination signals.

The housing 8 of the device 1 comprises a sealable or sealed opening 16, wherein the second portion 9b of the streaming parameter determination element 9 extends through the sealable or sealed opening 16. As is apparent from Fig. 2, the opening 16 may be provided as a slit. Sealing is provided by a sealing element 17 serving for sealing the (inner) housing volume 10 of the housing 8 of the device 1 from a fluid exchange, particularly with the fluid stream 2 streaming through the process chamber volume 3 of the process chamber 4 of the additive manufacturing apparatus 5 in the connected state. Sealing of the opening 16 avoids that the fluid stream 2 streams into the inner housing volume 10. The sealing element 17 may be built as or comprise a brush seal.

In the exemplary embodiment of the Fig., the opening 16 of the housing 8 is oriented towards the housing structure element 7 of the housing structure 6 of the additive manufacturing apparatus 5 the housing 8 of the device 1 is connectable or connected with.

As is apparent from Fig. 4, the streaming parameter determination element 9 is insertable or inserted, respectively into the process chamber volume 3 of the process chamber 4 of the additive manufacturing apparatus 5 in the connected state in order to generate respective determination signals.

Further processing of respective determination signals is performed by a hardware- and/or software-embodied streaming parameter determination unit (not shown). The streaming parameter determination element 9 is connectable or connected with at least one streaming parameter determination unit being configured to perform a respective further processing of determination signals. The streaming parameter determination unit 9 is particularly, configured to determine at least one streaming parameter of a fluid stream 2 streaming through the process chamber volume 3 of the process chamber 4 of the additive manufacturing apparatus 5 in the connected state. A connection of the streaming parameter determination element 9 and a respective streaming parameter determination unit may be accomplished through a connection interface 13, e.g. a connection plug interface, provided with housing wall 8a - 8f.

The streaming parameter determination element 9 is moveably supported relative to the housing 8 of the device 1. Moving the streaming parameter determination element 9 relative to the housing 8 of the device 1 allows for (freely) positioning the streaming parameter determination element 9 and the determination head 9c, respectively at different positions within the process chamber volume 3 of the process chamber 4 of the additive manufacturing apparatus 5 in the connected state.

As is particularly, apparent from Fig. 1, 3, the housing 8 of the device 1 comprises a plurality of attachment sites 14 for attaching the streaming parameter determination element 9. Each attachment sites 14 allows for a detachable attachment of the streaming parameter determination element 9. The attachment sites 14 are disposed inside the housing volume 10 of the housing 8 of the device 1. The streaming parameter determination element 9 comprises at least one attachment portion 9d for attaching the streaming parameter determination element 9 to a respective attachment site 14. The attachment sites 14 are provided with a housing wall 8d (bottom wall) of the housing 8 of the device 1. Fig. 1 shows that the attachment sites 14 may be arranged in a pattern, i.e. particularly in a grid-like pattern.

Each attachment site 14 corresponds to a specific determination position 15 of the determination head 9c of the streaming parameter determination element 9 within the process chamber volume 3 of the process chamber 4 of the additive manufacturing apparatus 5 in the connected state (see Fig. 4). Hence, attaching the streaming parameter determination element 9 to a specific attachment site 14 results in that the determination head 9c of the streaming parameter determination element 9 is disposed at a specific determination position 15 within the process chamber volume 3. Fig. 4 shows an optional further determination position 15 (indicated by a dotted line).

At least one attachment site 14 may be provided with at least one optical marking (not shown) indicating its corresponding determination position 15 of the determination head 9c of the streaming parameter determination element 9 within the process chamber volume 3 of the process chamber 4 of the additive manufacturing apparatus 4 in the connected state.

The attachment principle for detachably attaching the streaming parameter determination element 9 at a respective attachment site 14 may be implemented by a plug- or screw-attachment. An attachment site 14 of the housing 8 of the device 1 may e.g. be built as or comprise a first plug-attachment element and an attaching portion 9d of the streaming parameter determination element 9 may be built as or comprise a corresponding second plug-attachment element. As an example, an attachment site 14 of the housing 8 of the device 1 may be built as or comprises a, particularly bore-like, receptacle and an attaching portion 9d of the streaming parameter determination element 9 is built as or comprises a plug. Hence, a first attachment element may be built as or comprise a, particularly bore-like, receptacle and a second attachment element may be built as or comprise a plug.

The Fig. also show that the housing 8 of the device 1 is built as a glove-box comprising at least one glove element 21 being insertable or inserted in the (inner) housing volume 10. The glove element 21 allows for grasping the streaming parameter determination element 9, i.e. particularly the first portion 9a of the streaming parameter determination element 9, by a user or a robot. A user or robot may thus, grasp the streaming parameter determination element 9 and move the grasped streaming parameter determination element 9 to different positions inside the housing volume 10 of the housing 8 of the device 1. The streaming parameter determination element 9 may be moved to different attachment sites 14 or removed from different attachment sites 14 by simply grasping it.

The housing 8 of the device 1 may comprise at least one viewing portion allowing a user to have a view into the inner housing volume 10 of the housing 8 of the device 1. The viewing portion may be built by a transparent portion of an at least partially transparent housing wall 8a - 8f of the housing 8 of the device 1. At least one housing wall 8a - 8f of the housing 8 of the device 1 may thus, be built of or comprise a transparent material. A transparent material can be a glass or a transparent polymer, e.g. polycarbonate or polymethylmethacrylate, for instance. Notably, the complete housing 8 of the device 1 can be transparent.

As is indicated in Fig. 4, the device 1 may further comprise a support unit 18 configured to support the housing 8 of the device 1 in the connected state. The support unit 18 may particularly, be configured to support the housing 8 of the device on a ground in the connected state. The support unit 18 may be built as or comprise a support structure 19, e.g. a support frame. The support unit may thus, comprise a number of, particularly bar- or rod-like, support elements 20. The support elements 20 may be extendable, e.g. in telescope-like manner, in at least one spatial direction. The support unit 18 may comprise rollers or the like allowing for easily moving the support unit 18 and the device 1 to different positions relative to the additive manufacturing apparatus 5.

The device 1 may further comprise a stream generating unit (not shown) adapted to generate a stream of a test fluid for visualizing the streaming properties of the test fluid within the process chamber of an additive manufacturing apparatus 5 in the connected state. The stream generating unit may comprise a, particularly flexible, stream insertion element, e.g. a lance, which is adapted to introduce a respective test fluid in the process chamber.

By using the device in its intended manner, a method for determining at least one streaming parameter of a fluid stream 2 streaming through a process chamber volume 3 of a process chamber 4 of an additive manufacturing apparatus 5 may be implemented. The method may particularly, comprise the steps of detachably connecting the housing 8 of the device 1 with at least one housing structure element 7 of a housing structure 6 of an additive manufacturing apparatus 5 and inserting at least one streaming parameter determination element 9 inside the process chamber volume 3 of the process chamber 4 so as to be in contact with the fluid stream 2 in order to generate determination signals by the at least one streaming parameter determination element 9 and processing the measurement signals in order to determine at least one streaming parameter of the fluid stream 2.

## Claims

1. Device (1) for determining at least one streaming parameter of a fluid stream (2) streaming through a process chamber volume (3) of a process chamber (4) of an additive manufacturing apparatus (5), the device (1) comprising:
- a housing (8) detachably connectable or connected with at least one housing structure element (7) of a housing structure (6) of an additive manufacturing apparatus (5);
- at least one, particularly probe-like, streaming parameter determination element (9) disposed at or in the housing (8), the at least one streaming parameter determination element (9) being insertable or inserted into a process chamber volume (3) of a process chamber (4) of an additive manufacturing apparatus (5) when the housing (8) is connected with at least one housing structure element (7) of a housing structure (6) of an additive manufacturing apparatus (5).

2. Device according to Claim 1, **wherein** the at least one streaming parameter determination element (9) is connectable or connected with at least one streaming parameter determination unit being configured to determine at least one streaming parameter of a fluid stream (2) streaming through a process chamber volume (3) of a process chamber (4) of an additive manufacturing apparatus (5) when the housing (8) is connected with at least one housing structure element (7) of a housing structure (6) of an additive manufacturing apparatus (5).

3. Device according to Claim 1 or 2, **wherein** the housing (8) is detachably connectable or connected at the outside of at least one housing structure element (7) of a housing structure (6) of an additive manufacturing apparatus (5).

4. Device according to any of the preceding Claims, **wherein** the at least one streaming parameter determination element (9) is moveably supported relative to the housing (8).

5. Device according to any of the preceding Claims, **wherein** the housing (8) comprises a plurality of attachment sites (14) for detachably attaching an attaching portion (9d) of the at least one streaming parameter determination element (9).

6. Device according to Claim 5, **wherein** each attachment site (14) corresponds to a specific determination position of a determination head (9c) of the at least one streaming parameter determination element (9) within a process chamber volume (3) when the housing (8) is detachably connected with at least one housing structure element (7) of a housing structure (6) of an additive manufacturing apparatus (5).

7. Device according to Claim 5 or 6, **wherein** the attachment sites (14) are arranged in a regular or irregular pattern, particularly in a grid-like pattern.

8. Device according to any of Claims 5 - 7, **wherein** an attachment site (14) of the housing (8) is built as or comprises a first attachment element and an attaching portion (9d) of the at least one streaming parameter determination element (9) is built as or comprises a corresponding second attachment element.

9. Device according to any of the preceding Claims, **wherein** the at least one streaming parameter determination element (9) has a first portion (9a) extending inside the housing (8) and a second portion (9b) extending outside the housing (8).

10. Device according to any of the preceding Claims, **wherein** the housing (8) comprises at least one sealable or sealed opening (16), wherein the at least one streaming parameter determination element (9) extends through the sealable or sealed opening (16).

11. Device according to any of the preceding Claims, **wherein** the housing (8) comprises at least one viewing portion allowing a user to have a view into the inner housing volume (10).

12. Device according to any of the preceding Claims, **wherein** the housing (8) is built as or comprises a glove-box comprising at least one glove element (21) being insertable or inserted in an inner housing volume (10).

13. Device according to any of the preceding Claims, **comprising** a stream generating unit adapted to generate a stream of a test fluid for visualizing the streaming properties of the test fluid within the process chamber (4) of an additive manufacturing apparatus (5) when the housing (8) is connected with at least one housing structure element (7) of a housing structure (6) of an additive manufacturing apparatus (5).

14. Device according to any of the preceding Claims, **comprising** a support unit (18) configured to support the housing (8) when being connected with the at least one housing structure element (7) of the additive manufacturing apparatus (5).

15. Apparatus (5) for additively manufacturing at least one three-dimensional part by means of successive layerwise selective irradiation and consolidation of layers of build material, the apparatus (5) comprising at least one device (1) according to any of Claims 1 - 14.

16. Method for determining at least one streaming parameter of a fluid stream (2) streaming through a process chamber volume (3) of a process chamber (4) of an additive manufacturing apparatus (5), **wherein** at least one device (1) according to any of Claims 1 - 14 is used for determining the at least one streaming parameter.
